# FASCICULE DE BREVET EUROPEEN

(11) **EP 3 100 519 B1**
(45) Date de publication et mention de la délivrance du brevet: **14.03.2018**
(21) Numéro de dépôt: 15700728.7
(22) Date de dépôt: 20.01.2015
(51) Int. Cl.: H04W 40/22, H04W 40/24, H04L 12/721, H04L 12/751

(54) **PROCÉDÉ DE RELAYAGE MIS EN UVRE DANS UN RÉSEAU DE RADIOCOMMUNICATION ET TERMINAL POUR LA MISE EN OEUVRE DUDIT PROCÉDÉ**
IN EIN FUNKKOMMUNIKATIONSNETZWERK IMPLEMENTIERTES RELAISVERFAHREN UND ENDGERÄT ZUR IMPLEMENTIERUNG DES BESAGTEN VERFAHRENS
RELAY METHOD IMPLEMENTED IN A RADIO COMMUNICATION NETWORK AND TERMINAL FOR IMPLEMENTING SAID METHOD

(30) Priorité: 30.01.2014 FR 1450745
(43) Date de publication de la demande: 07.12.2016
(73) Titulaire: Safran Electronics & Defense, 92100 Boulogne-Billancourt (FR)
(72) Inventeur: CHIODINI, Alain, F-92100 Boulogne Billancourt (FR); ROVER, Arnaud, F-92100 Boulogne Billancourt (FR); GUETTIER, Christophe, F-92100 Boulogne Billancourt (FR); ALLARD, Géraud, F-92100 Boulogne Billancourt (FR); YELLOZ, Jacques, F-92100 Boulogne Billancourt (FR); HENRY, Pierre-Antoine, F-92100 Boulogne Billancourt (FR)
(74) Mandataire: Le Guen-Maillet
(86) Numéro de dépôt international: PCT/EP2015/051034
(87) Numéro de publication internationale: WO 2015/113869

(56) Documents cités:
- EP-B1- 0 811 286
- GB-A- 2 460 701
- CLAUSEN T ET AL: "Optimized Link State Routing Protocol (OLSR); rfc3626.txt", 20031001, 1 octobre 2003 (2003-10-01), XP015009408, ISSN: 0000-0003

## Description

La présente invention concerne un procédé de relayage mis en oeuvre dans un réseau de radiocommunication. Plus précisément, un procédé de relayage selon la présente invention est mis en oeuvre soit dans un réseau de radiocommunication comportant une pluralité de noeuds dont un noeud est un noeud coordinateur avec lequel un des autres noeuds du réseau peut entrer en communication, soit dans un réseau de communication comportant un sous-réseau haut et au moins un sous-réseau bas, chaque sous-réseau comportant alors une pluralité de noeuds dont un noeud est un noeud coordinateur avec lequel un des autres noeuds du sous-réseau peut entrer en communication, le noeud coordinateur d'un sous-réseau bas appartenant au sous-réseau haut. Chaque noeud coordinateur émet un signal de balise pour permettre aux noeuds dudit réseau ou dudit sous-réseau correspondant de se synchroniser et d'ainsi éventuellement communiquer avec ledit noeud coordinateur du sous-réseau dont il dépend.

Des procédés de relayage connus sont par exemple illustrés dans la demande de brevet anglais n° GB2460701 A publiée le 9 décembre 2009 ou bien dans le brevet européen n° EP0811286 B1 délivré le 24 octobre 2011. Le réseau de radiocommunication qui est représente aux Figs, la et 1b, est constitué de noeuds n1 à n4 eux-mêmes constitués d'équipements de radiocommunication mobiles, tels que des radiotéléphones, des terminaux, etc. Ces équipements de radiocommunication seront appelés de manière générique des terminaux.

Dans la suite de la description, on utilisera le terme "noeud" pour désigner le terminal de ce noeud. Ainsi, plutôt que de parler du terminal du noeud n1, on parlera du noeud n1.

Ce réseau comporte un noeud coordinateur n1 avec lequel, à un moment donné, un noeud parmi les autres noeuds du réseau, en l'occurrence le noeud n2, est en communication (flèche A). Pour pouvoir communiquer avec le terminal du noeud coordinateur n1, un terminal doit être synchronisé avec lui. Pour ce faire, le terminal du noeud coordinateur n1 émet un signal de balise B qui, lorsqu'il est reçu par un terminal d'un autre noeud du réseau, permet à ce terminal de se synchroniser sur le signal de balise B et donc avec le terminal du noeud coordinateur n1. Il peut par conséquent entrer en communication avec le noeud coordinateur n1.

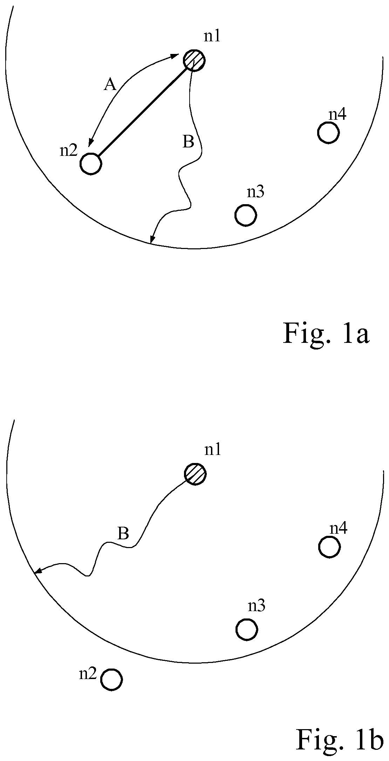

Dans le réseau dont il est question ici, un unique noeud peut être en communication avec le noeud coordinateur n1. Les autres noeuds (par exemple dans le cas de la Fig. 1a, les noeuds n3 et n4) peuvent écouter la communication entre les noeuds en communication (les noeuds n1 et n2). Par exemple, les signaux résultant de cette communication sont portés par le signal de balise B.

Le réseau représenté aux Fig. 1a et 1b est un réseau dit "Ad hoc" du fait qu'il n'incorpore pas d'infrastructure de contrôle centralisée, hormis l'émission du signal de balise B par le noeud coordinateur n1.

Comme on peut le remarquer sur la Fig. 1b représentant le même réseau à un autre moment, le noeud n2 s'est déplacé d'une zone de bonne couverture à une zone de non-couverture et a perdu le contact radio qui le liait au noeud n1 (Sur la Fig. 1b, la ligne entre les deux noeuds a disparu). Ainsi, le noeud n2 ne reçoit plus les signaux de balise B émis par le noeud coordinateur n1 (il se trouve en dehors de la zone de couverture de ces signaux de balise B) si bien qu'il ne peut plus se synchroniser sur lui.

Un objet de la présente invention est de prévoir un procédé de relayage qui permette qu'un noeud, dit noeud relais, comme par exemple le noeud n3 des Figs. 1a et 1b, relaye la communication d'un noeud, dit noeud à relayer, en l'occurrence le noeud n2, vers le noeud coordinateur n1 du réseau considéré avec lequel ledit noeud à relayer n2 est en communication et dont il a perdu le contact radio qu'il avait avec lui, et ce, bien qu'il ne reçoit plus ou mal les signaux balise émis par ledit noeud coordinateur.

A cet effet, un procédé de relayage selon l'invention est caractérisé en ce qu'il comporte :
- une étape de détection par un noeud dudit réseau d'une situation de relayage, ledit noeud devenant un noeud à relayer,
- une étape de sélection par ledit noeud à relayer, parmi les noeuds voisins à un saut du noeud à relayer, d'un noeud relais,
- une étape d'émission par ledit noeud relais d'un signal de balise différent du signal de balise émis par le noeud coordinateur du réseau,
- une étape de synchronisation dudit noeud à relayer sur le signal de balise émis par le noeud relais, et d'établissement de la route suivie par la communication via ledit noeud relais.

Avantageusement, ladite étape de détection consiste à mesurer la qualité de réception des signaux de balise émis par le noeud coordinateur dudit réseau, à comparer la qualité ainsi mesurée à un seuil et à considérer une situation de relayage détectée lorsque ladite qualité est inférieure audit seuil.

Avantageusement, ladite étape de sélection consiste à établir la topologie dudit réseau dans son ensemble pour déterminer les noeuds qui sont voisins à un saut dudit noeud à relayer et qui sont en contact radio avec ledit noeud à relayer et pour sélectionner le noeud relais offrant la route la plus appropriée conformément à des critères de sélection, vers le noeud coordinateur.

Avantageusement, après avoir sélectionné un noeud relais, ledit noeud à relayer transmet une requête de balise audit noeud relais, lequel transmet en réponse un message d'acquittement contenant les caractéristiques des signaux de balise émis par ledit noeud relais, ladite requête et ledit message d'acquittement transitant via un canal temporaire créé à l'occasion.

Avantageusement, ledit noeud à relayer, pour la transmission de ladite requête de balise, se synchronise sur des signaux de balise émis de manière continue par le noeud relais.

Avantageusement, pour établir la route suivie par la communication via ledit noeud relais, un canal physique de données est créé entre ledit noeud à relayer et ledit relais, ainsi qu'un canal physique de données entre le noeud relais et ledit noeud coordinateur.

Avantageusement, lorsque ledit noeud relais n'appartient pas au même sous-réseau que le noeud à relayer, le noeud relais, à la réception de la requête de balise émanant dudit noeud à relayer, transmet au noeud coordinateur du sous-réseau dudit noeud à relayer une requête de balise.

Avantageusement, les noeuds coordinateurs ainsi que les noeuds relais émettent des signaux de balise en plusieurs exemplaires sur des créneaux différents, lesdits signaux de balise portant la même information.

Le but de la présente invention est également de prévoir un réseau dont les noeuds sont pourvus des moyens nécessaires à la mise en oeuvre dudit procédé de relayage qui vient d'être décrit. Pour ce faire, la présente invention concerne un terminal de radiocommunication susceptible d'être un noeud d'un réseau de radiocommunication du type où un noeud coordinateur émet un signal de balise pour permettre aux noeuds dudit réseau de se synchroniser et de communiquer entre eux, caractérisé en ce qu'il comporte :
- des moyens de détection prévus pour détecter une situation de relayage,
- des moyens pour établir la topologie du réseau dans son ensemble,
- des moyens pour sélectionner, lorsque les moyens de détection ont détecté une situation de relayage, parmi ses noeuds voisins à un saut déterminés par lesdits moyens, un noeud relais,
- des moyens pour déclencher et mettre en oeuvre le procédé de relayage vers le noeud préalablement sélectionné par les moyens de sélection.

Les caractéristiques de l'invention mentionnées ci-dessous, ainsi que d'autres, apparaîtront plus clairement à la lecture de la description suivante d'exemples de réalisation, ladite description étant faite en relation avec les dessins joints, parmi lesquels :
Les Figs. 1a et 1b sont des vues d'un réseau qui illustrent le problème soulevé par le relayage,
Les Figs. 2a et 2c sont des vues d'un réseau qui illustrent le procédé de relayage selon la présente invention,
La Fig. 3 est un diagramme montrant les différentes étapes qui sont mises en oeuvre dans un procédé de relayage selon la présente invention,
La Fig. 4 est un schéma synoptique d'un terminal susceptible d'être un noeud d'un réseau mettant en oeuvre un procédé de relayage selon la présente invention,
La Fig. 5 est un diagramme montrant les différents échanges de messages entre les noeuds à relayer, relais et coordinateur pendant l'exécution d'un procédé de relayage selon la présente invention,
Les Figs. 6a à 6c sont des vues d'un réseau hiérarchisé mettant en oeuvre un procédé de relayage selon la présente invention,
La Fig. 7 est un diagramme montrant les différents échanges de messages entre les noeuds à relayer, relais et coordinateur pendant l'exécution d'un procédé de relayage mis en oeuvre dans un réseau hiérarchisé selon les Figs. 6a à 6c,
La Fig. 8 est une vue d'une trame d'un système de radiocommunication du type DECT, et
Les Figs. 9a et 9b sont des diagrammes montrant les échanges de signaux entre deux noeuds en communication directe d'une part, et entre noeud à relayer, noeud relais et noeud coordinateur pendant l'exécution d'un procédé de relayage selon la présente invention.

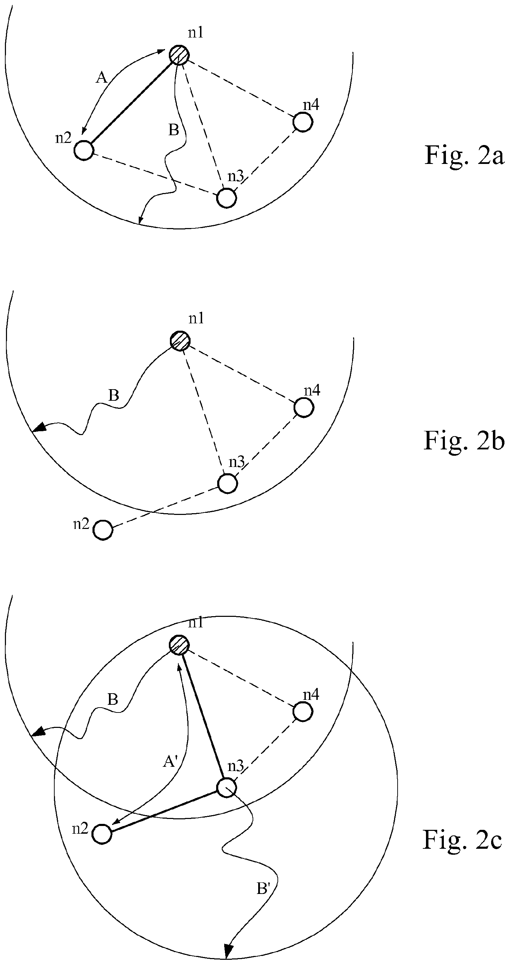

On considère le réseau de la Fig. 2a (qui est identique au réseau de la Fig. 1a) qui est donc constitué de quatre noeuds n1 à n4 dont l'un, le noeud n1, est un noeud coordinateur et, à ce titre, émet au moins un signal de balise B afin que les autres noeuds du réseau, en l'occurrence, les noeuds n2 à n4, puissent se synchroniser sur ce signal de balise B et éventuellement émettre des signaux de données à destination du noeud coordinateur n1 du réseau considéré et en recevoir dudit noeud coordinateur n1. Dans l'exemple de la Fig. 2a, le noeud n2 est en communication avec le noeud coordinateur n1 (flèche A). De plus, ici, chaque noeud du réseau est en contact radio avec un noeud voisin (traits pointillés entre les noeuds), c'est-à-dire que chaque noeud reçoit les signaux radio éventuellement émis par un autre noeud avec lequel il est en contact radio.

On suppose maintenant que le noeud n2 qui s'est déplacé (Fig. 2b), pour une raison ou une autre, ne reçoit plus correctement les signaux émis par le noeud coordinateur n1 (il n'est plus en contact radio avec lui) et, notamment les signaux de balise B émis par celui-ci. Cela peut être dû à un déplacement du noeud n2 dans une zone non couverte par les signaux du noeud n1. Cela peut être dû à un phénomène dit de "fading" (évanouissement) provoqué par la réflexion multiple des ondes électromagnétiques sur des obstacles, tels que des murs de bâtiment en zone urbaine, ce qui entraîne des variations importantes des niveaux du signal reçu par le noeud considéré lorsqu'il se déplace entre des lieux peu distants.

Le noeud n2 ne peut donc plus communiquer avec le noeud n1. Néanmoins, il est en contact radio avec le noeud voisin n3 (voir les traits en pointillés de la Fig. 2b) si bien que, par les moyens de la présente invention, une nouvelle route passant par un noeud relais, en l'occurrence, le noeud n3 permet d'assurer la continuité de la communication avec le noeud coordinateur n1 (Flèche A' à la Fig. 2c). Le noeud n2 est dit alors le noeud à relayer.

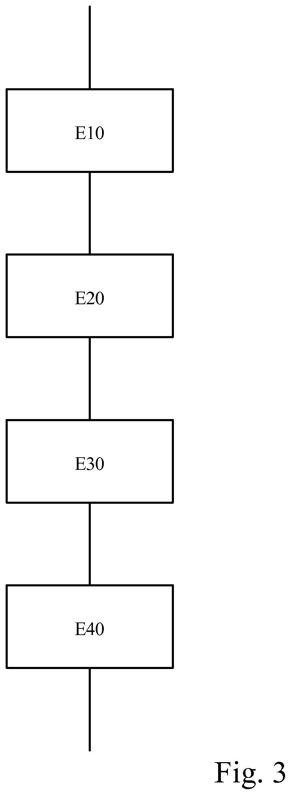

Une première étape E10 (voir Fig. 3) du procédé de l'invention est une étape de détection d'une situation de relayage qui consiste à mesurer la qualité de réception des signaux de balise B émis par le noeud coordinateur n1 et à comparer cette qualité de réception à un niveau prédéterminé. Par exemple, cette qualité est mesurée par le taux d'erreurs trame. Ainsi, une situation de relayage est détectée lorsque le taux d'erreurs trame est supérieur à un seuil, par exemple de 20%. Après avoir été considérée comme mauvaise, une réception des signaux de balise du noeud coordinateur n1 sera de nouveau considérée de qualité suffisante lorsque ce taux d'erreurs trame redevient inférieur à un autre seuil, par exemple de 5%. La situation de relayage n'existe alors plus et la communication directe peut reprendre.

On peut constater qu'à la Fig. 2b, le noeud n2 s'est déplacé en dehors de la zone de couverture du signal de balise B émis par le noeud coordinateur n1 et qu'une situation de relayage est détectée.

Une seconde étape E20 du procédé de l'invention mise en oeuvre après qu'une situation de relayage a été détectée est une étape de sélection, parmi les noeuds voisins à un saut du noeud à relayer n2, du noeud le plus approprié, dit noeud relais, qui est susceptible de relayer sa communication avec le noeud coordinateur n1. En l'occurrence, il s'agit du noeud n3, avec lequel le noeud n2 est en contact radio (voir Fig. 2b).

Une troisième étape E30 du procédé de l'invention est une étape d'émission par le noeud relais n3 ainsi déterminé à l'étape précédente, à la requête du noeud à relayer n2, d'un signal de balise B' (Fig. 2c) différent du signal de balise B (ceci afin de ne pas interférer avec le signal de balise B et ne pas perturber son émission ainsi que la synchronisation des autres noeuds du réseau, par exemple le noeud n4). Bien que le signal de balise B' soit différent du signal de balise B, il peut néanmoins porter les mêmes informations.

Une quatrième E40 étape du procédé de l'invention est une étape de synchronisation du noeud à relayer n2 sur le signal de balise B' du noeud relais n3 et d'établissement de la route suivie par la communication via le noeud relais n3 (flèche A' de la Fig. 2c).

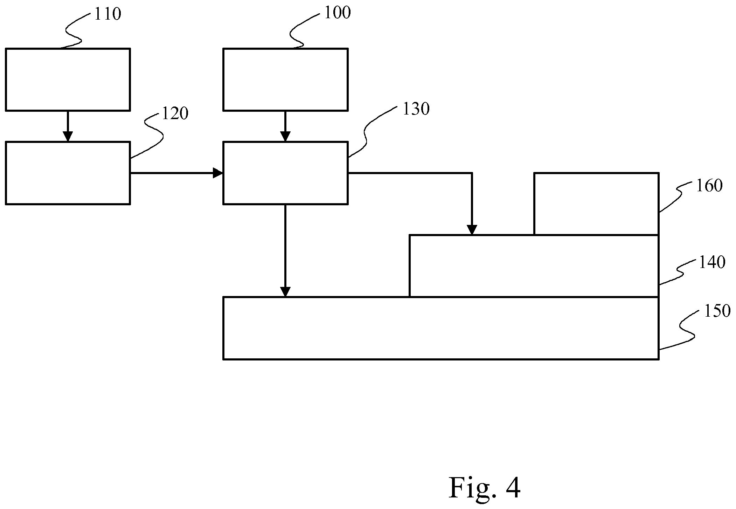

La Fig. 4 est un schéma synoptique d'un terminal d'un noeud d'un réseau selon la présente invention qui est pourvu des moyens nécessaires à la mise en oeuvre du procédé qui vient d'être décrit.

Ainsi, chaque terminal d'un noeud du réseau est pourvu de moyens de détection d'une situation de relayage 100 prévus pour mesurer la qualité de réception des signaux de balise émis par le noeud coordinateur n1 et pour comparer cette qualité de réception à un niveau prédéterminé. Une situation de relayage est détectée lorsque la qualité de réception des signaux de balise du noeud coordinateur est inférieure à ce niveau prédéterminé.

Par exemple, comme décrit précédemment en relation avec l'étape E10 du procédé, cette qualité est mesurée par le taux d'erreurs trame.

Chaque terminal d'un noeud est pourvu de moyens 110 pour établir la topologie du réseau, dans son ensemble. Ainsi, chaque noeud peut identifier l'adresse du ou des noeuds du réseau qui lui sont voisins et avec lesquels il est en contact radio et est donc susceptible de communiquer. Par exemple, pour ce faire, chaque noeud du réseau met en oeuvre un protocole de routage qui est avantageusement du type proactif permettant d'établir une table de routage qui donne, en fonction d'une adresse d'un noeud de destination, l'adresse du noeud voisin susceptible d'être utilisé pour atteindre ce noeud de destination. Un exemple d'un tel protocole est un protocole à états de liens, comme le protocole OLSR (Optimized Link State Routing : routage à état de lien optimisé) décrit dans la RFC3626 (Request for Comments : demande de commentaires). Le principe d'un tel protocole est le suivant : chaque noeud du réseau, dit noeud émetteur, diffuse périodiquement sur un canal de diffusion approprié des messages, dits messages HELLO, auxquels les noeuds voisins à un saut dudit noeud émetteur, s'ils les ont bien reçus, répondent. Ainsi, de proche en proche, il est possible de connaître l'état et le type des liens entre deux noeuds du réseau. Des messages, dits messages TC (Topology Control = contrôle de topologie) sont périodiquement diffusés par certains noeuds du réseau afin que chaque noeud du réseau en définitive puisse avoir une connaissance de la topologie complète du réseau et ainsi établir une table de routage qui donne, en fonction d'une adresse d'un noeud de destination, l'adresse du noeud voisin susceptible d'être utilisé pour atteindre ce noeud de destination.

Chaque noeud du réseau est encore pourvu de moyens 120 pour sélectionner, lorsque les moyens de détection 100 ont détecté une situation de relayage, parmi ses noeuds voisins à un saut déterminés par lesdits moyens 110, un noeud relais. Chaque noeud voisin à un saut du noeud à relayer considéré est un noeud relais potentiel sur une route du noeud à relayer vers le noeud coordinateur. La sélection d'un noeud relais revient à choisir la route du noeud à relayer vers le noeud coordinateur la plus appropriée et dépend donc de la nature de cette route. Différents critères pourront être utilisés pour cette sélection. Par exemple, sera choisi le noeud relais à un saut dont la route vers le noeud coordinateur a un nombre de noeuds traversés minimum. Seront exclues certaines routes qui traversent des noeuds déterminés. Seront exclues les routes traversant des noeuds qui sont déjà utilisés en tant que noeuds relais, par exemple pour d'autres noeuds du réseau.

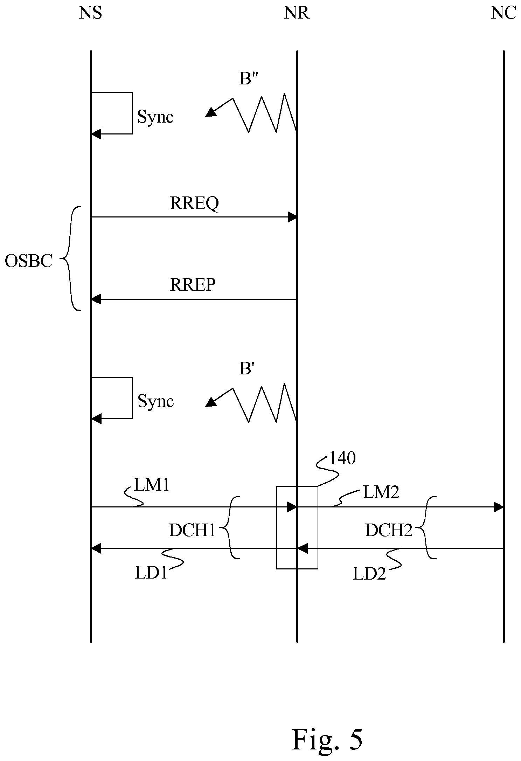

Chaque terminal d'un noeud du réseau est également pourvu de moyens 130 pour déclencher et mener à bien le processus de relayage vers le noeud préalablement sélectionné par les moyens de sélection 120. Ce processus de relayage est conforme au procédé qui est décrit ci-dessus en relation avec les Figs. 2a à 2c et 3. Il est maintenant décrit plus précisément en relation avec la Fig. 5.

Ce processus de relayage est initié par l'émission par le noeud à relayer (référencé NS sur la Fig. 5, comme noeud subordonné, correspondant au noeud n2 des Figs. 2a à 2c) d'une requête RREQ de balise destinée au noeud relais NR (correspondant au noeud n3 des Figs. 2a à 2c) qui a été sélectionné par les moyens de sélection 120. A partir de la réception de cette requête RREQ, le noeud relais NR émet en permanence un signal de balise B' différent du signal de balise B comme explicité ci-dessus. Un message d'acquittement RREP est transmis en réponse au noeud à relayer NS, message contenant les caractéristiques de la balise B'. Ainsi, le noeud à relayer NS peut maintenant détecter la balise B' et se synchroniser sur le noeud relais NR.

Pour permettre la transmission de la requête RREQ et celle de sa réponse RREP, un canal OSBC (One Shot Bearer Channel) est créé temporairement entre le noeud à relayer NS et le noeud relais NR. De plus, pour que ces transmissions puissent être effectuées, il est nécessaire que le noeud à relayer NS soit synchronisé, au moins temporairement. Pour ce faire, chaque noeud du réseau et donc *a fortiori,* le noeud relais NR considéré, émet, de manière non-continue (par exemple, la moitié du temps), une balise, dite balise d'accrochage B".

Ainsi, pour déclencher et mener à bien un processus de relayage vers un noeud préalablement sélectionné, un noeud à relayer NS met en oeuvre les étapes suivantes :
- une étape de synchronisation sur le noeud relais sélectionné NR à partir du signal de balise d'accrochage B" reçu de ce noeud relais NR,
- une étape de création d'un canal OSBC pour la transmission d'une requête de balise RREQ,
- une étape de transmission de ladite requête RREQ,
- une étape de réception du message d'acquittement RREP,
- une étape de libération du canal OSBC,
- une étape de synchronisation sur le signal de balise B' émis (en continu) par le noeud relais NR.

Une fois le noeud à relayer NS synchronisé sur les signaux de balise B' émis par le noeud relais NR, des ressources sont affectées, au niveau de chacun de ces noeuds NS et NR, respectivement aux liens montant LM1 et descendant LD1 entre eux, créant ainsi entre eux un canal physique de données DCH1. De même, des ressources sont affectées, au niveau du noeud relais NR et du noeud coordinateur NC (correspondant au noeud n1 des Figs. 2a à 2c), respectivement aux liens montant LM2 et descendant LD2 entre eux, créant également entre eux un canal physique de données DCH2.

Chaque noeud du réseau (qui est potentiellement un noeud relais NR) est pourvu de moyens 140 (voir Fig. 5 mais aussi Fig. 4) pour rediriger, d'une part, le lien descendant LD1 entre le noeud à relayer NS et le noeud relais NR vers le lien descendant LD2 entre le noeud relais NR et le noeud coordinateur NC et, d'autre part, le lien montant LM2 entre le noeud coordinateur NC et le noeud relais NR vers le lien descendant LM1 entre le noeud relais NR et le noeud à relayer NS.

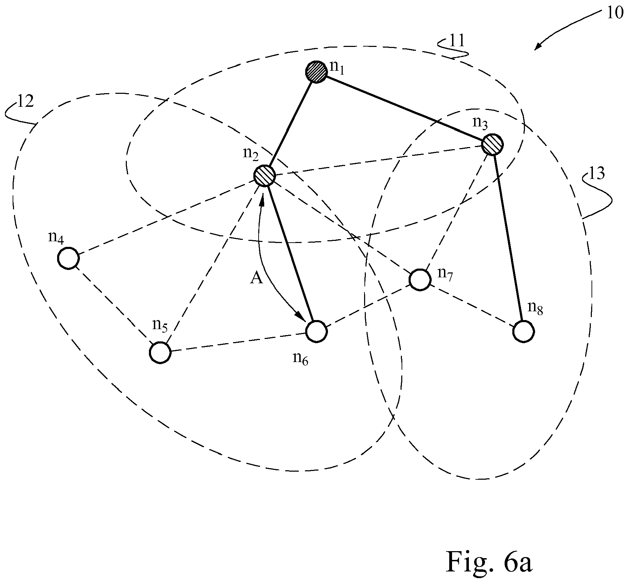

La présente invention s'applique également à des réseaux de radiocommunication, tel que celui des Figs. 6a à 6c qui est organisé hiérarchiquement en un sous-réseau dit "haut" 11 regroupant les noeuds n1 à n3 et au moins deux sous-réseaux dits "bas" 12 et 13 regroupant respectivement les noeuds n2, n4, n5 et n6 et les noeuds n3, n7 et n8. Le noeud n1 du sous-réseau haut 11 est le noeud coordinateur du sous-réseau haut 11. De même, les noeuds n2 et n3 des sous-réseaux bas respectifs 12 et 13 sont des noeuds coordinateurs des sous-réseaux bas respectifs 12 et 13. Chaque noeud d'un sous-réseau 11, 12 ou 13 n'appartient pas à un autre sous-réseau, à l'exception des noeuds coordinateurs n2 et n3 des sous-réseaux bas 12 et 13 qui appartiennent au sous-réseau haut 11. De plus, un noeud coordinateur d'un sous-réseau bas ne peut être un noeud coordinateur du réseau haut.

Le noeud n1 coordinateur du sous-réseau haut 11 émet régulièrement un signal de balise B11 permettant aux noeuds habilités à lire ce signal de balise B11, en l'occurrence les noeuds n2 et n3, de se synchroniser avec le noeud coordinateur n1. De même, le noeud n2 coordinateur du sous-réseau bas 12 émet régulièrement un signal de balise B12 permettant aux noeuds habilités à lire ce signal de balise B12 de se synchroniser sur le noeud coordinateur n2. Il s'agit des noeuds n4, n5 et n6 du sous-réseau bas 12. De même encore, le noeud n3 coordinateur du sous-réseau bas 13 émet régulièrement un signal de balise B13 permettant aux noeuds habilités à lire ce signal de balise B13 de se synchroniser sur le noeud coordinateur n3. Il s'agit des noeuds n7 et n8. Les signaux de balise sont distincts les uns des autres. Par exemple, le signal de balise B12 est distinct des signaux de balise B11 et B 13 de manière qu'un noeud du sous-réseau 12, par exemple le noeud n6, ne puisse se synchroniser sur un noeud du sous-réseau 13, par exemple le noeud n7, même s'il en reçoit le signal de balise B13.

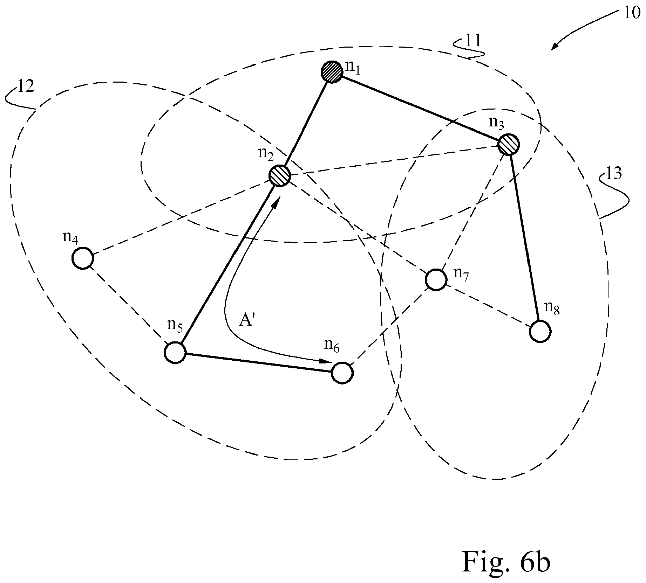

A la Fig. 6b, le noeud n6 s'est déplacé par rapport à la position qu'il occupait à la Fig. 6a, d'une zone à bonne couverture à une zone de couverture moindre, et ne reçoit plus le signal de balise B11 qu'il recevait jusqu'alors du noeud coordinateur n2. Le noeud n6 a donc détecté une situation de relayage. Néanmoins, le noeud n5 avec lequel il est en contact radio, pourra relayer les signaux de données du noeud n6 vers le noeud n2 et réciproquement.

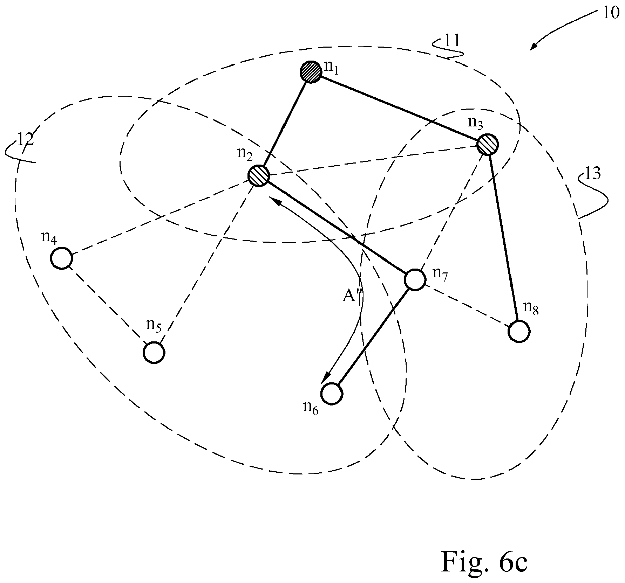

Un instant encore après (voir Fig. 6c), le noeud n6, qui s'est encore déplacé, ne reçoit plus les signaux de balise émis respectivement par le noeud coordinateur n2 et le noeud relais n5. Néanmoins, il est en contact radio avec le noeud n7, qui appartient au sous-réseau 13 différent du réseau d'appartenance du noeud n6. Le noeud n7 est de plus en contact radio avec le noeud coordinateur n2 du sous-réseau 12. Ainsi, le noeud n7 pourra relayer les communications du noeud n6 vers le noeud n2 (voir flèche A").

Dans le premier cas de relayage (Fig. 6b), le relayage est dit "interne" car le noeud relais n5 se trouve dans le même sous-réseau 12 que le noeud n6 à relayer alors que, dans le second cas (Fig. 6c), il est dit "externe" car le noeud relais n7 ne se trouve pas dans le même sous-réseau 12 que le noeud n6 à relayer.

Le processus de relayage "interne" avec ce type de réseau "hiérarchisé" est identique à celui qui a été décrit en relation avec les Figs. 2a et 2b, et aussi notamment avec la Fig. 5.

Le processus de relayage "externe" diffère du processus de relayage "interne" par le fait que le noeud relais NR, qui appartient à un autre sous-réseau (en l'occurrence le sous-réseau 13) que le sous-réseau 12 du noeud coordinateur n2 NC et du noeud à relayer NS, n'a pas connaissance du signal de balise B émis par ce noeud coordinateur NC. Par exemple, à la Fig. 6c, le noeud relais n7 n'a pas connaissance du signal de balise B émis par le noeud coordinateur n2 du sous-réseau 12.

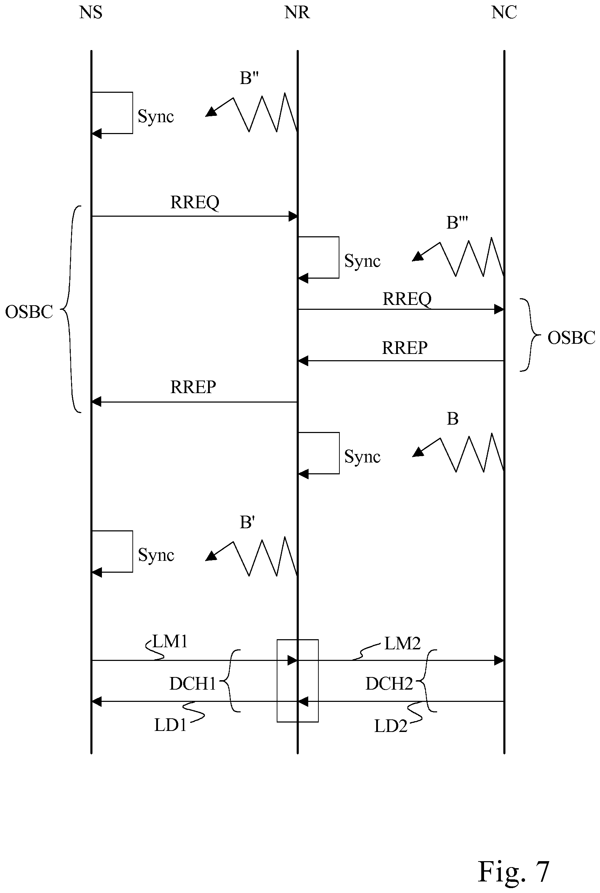

Comme cela est montré à la Fig. 7, le noeud relais NR (correspondant au noeud n7 de la Fig. 6c), à la réception de la requête de balise RREQ, émet également une requête de balise RREQ à destination du noeud coordinateur NC (correspondant au noeud n2 de la Fig. 6c). Celui-ci répond en un message d'acquittement RREP lequel contient les caractéristiques du signal de balise émis par le noeud NC. Ainsi, le noeud relais NR (le noeud n7 du sous-réseau 13 à la Fig. 6c) peut se synchroniser avec le noeud coordinateur NC (le noeud n2 du sous-réseau 12) en utilisant le signal de balise B émis par ce noeud coordinateur NC (en l'occurrence, le signal balise B12 émis par le noeud coordinateur n2).

Pour permettre la transmission de cette requête RREQ et celle de sa réponse RREP, un canal OSBC est créé temporairement entre le noeud NR et le noeud coordinateur NC. De plus, pour que ces transmissions puissent être effectuées, il est nécessaire que le noeud à relayer NS soit synchronisé, au moins temporairement. Pour ce faire, le noeud relais NR utilise le signal de balise d'accrochage B'" émis par le noeud coordinateur NC (correspondant au noeud n2 de la Fig. 6c).

On notera que pour sélectionner le noeud relais, la topologie du réseau à considérer est le réseau pris dans sa globalité, en l'occurrence l'ensemble du réseau constitué des trois sous-réseaux 11, 12 et 13.

Une mise en oeuvre de la présente invention est possible dans un système de radiocommunication du type de celui qui est nommé DECT (Digital Enhanced Cordless Télécommunication : Télécommunication numérique améliorée sans fil) et qui est décrit principalement dans les normes ETSI EN 300 175 parties 1 à 8.

Comme il est classique en matière de télécommunications, plusieurs couches protocolaires sont prévues : la couche physique PHY, la couche d'accès au médium MAC, la couche de contrôle de liaison de données, DLC, etc.

A la Fig. 4, on a représenté à titre indicatif la couche MAC 150 et la couche DLC 160. On remarquera que les moyens 140 sont implémentés entre la couche MAC 150 et la couche DLC. Cette implémentation particulière permet de ne pas encapsuler dans les paquets physiques des données protocolaires réseau supplémentaires telles des adresses des noeuds source et destination des messages échangés. Cela permet également d'alléger le traitement logiciel et de diminuer le temps de latence entre émission et réception.

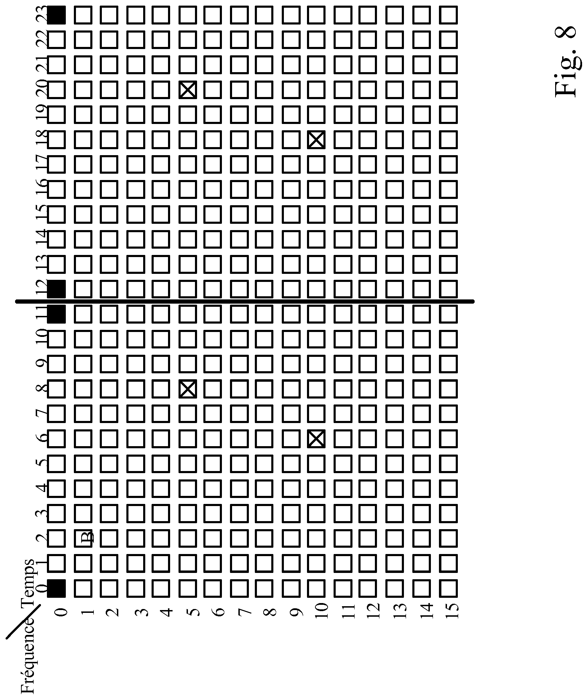

Dans ce système, les radiocommunications sont effectuées par transmission de paquets physiques dans des trames, dites trames TDMA (Time Division Multiplex Access : accès à multiplexage par division temporelle), divisées temporellement en créneaux temporels (slots), par exemple au nombre de 12 pour les liaisons montantes (d'une partie mobile vers une partie fixe), numérotés de 0 à 11 à la Fig. 8, et également de 12 pour les liaisons descendantes (d'une partie fixe vers une partie mobile), numérotés de 12 à 23. Chaque slot peut être émis sur une parmi 16 fréquences différentes (numérotées de 0 à 15) assurant ainsi une division fréquentielle FDMA (Frequency Division Multiplex Access : accès à multiplexage par division fréquentielle).

Dans le créneau 2 à la fréquence 1, on a représenté le signal de balise B. Les croix indiquent des canaux de données respectivement sur le créneau 8, à la fréquence 5 et le créneau 6 à la fréquence 10, pour l'émission et sur le créneau 20 (8+12) à la même fréquence 5 et sur le créneau 18 (6+12) pour la réception.

Les créneaux 0 et 11, ainsi que 12 et 13 à la fréquence 0 (en noir sur la Fig. 8) correspond au canal de diffusion pour le protocole de routage.

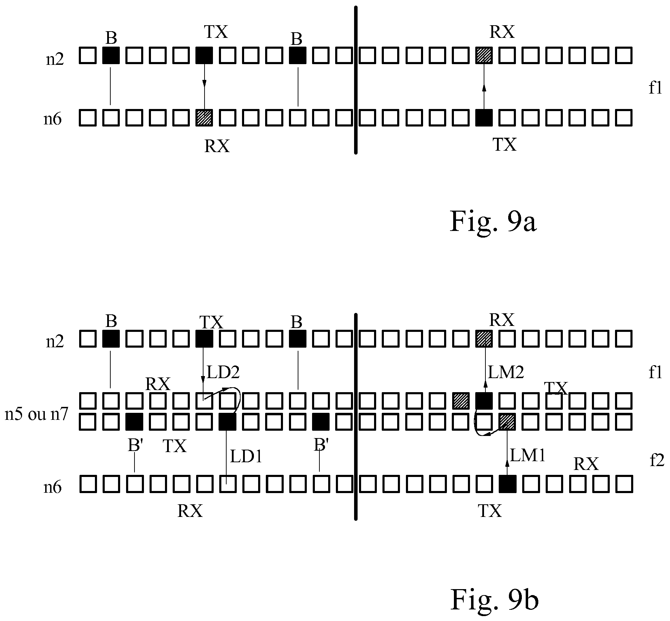

A la Fig. 9a, on a représenté les créneaux temporels émis (TX) et reçus (RX) par les noeuds n2 et n6 de la Fig. 6a lorsqu'ils sont en communication directe l'un avec l'autre. On voit que le noeud n2 émet deux signaux de balise B dans les créneaux 1 et 9, des signaux de données dans le créneau 5 et reçoit des signaux de données dans le créneau 17 (5+12). De même, le noeud n6 reçoit les signaux de données émis par le noeud n2 dans le créneau 17 et émet des signaux de données dans le créneau 5.

A la Fig. 9b, on a représenté les créneaux temporels émis (TX) et reçus (RX) par les noeuds n2 et n6 lorsqu'ils sont en communication l'un avec l'autre relayés par un noeud relais, n5 ou n7 respectivement aux Figs. 6b et 6c. On voit que le noeud n2 émet deux signaux de balise B dans les créneaux 1 et 9, des signaux de données dans le créneau 5 et reçoit des signaux de données dans le créneau 17 (5+12). Le noeud n5 ou n7 reçoit les signaux de données émis par le noeud n2 dans le créneau 17 et émet des signaux de données vers le noeud n2 dans le créneau 5. Les deux noeuds n2 et n5 ou n7 utilisent pour ce faire une fréquence f1. Le noeud n5 ou n7 émet, sur une fréquence f2, deux balises B' respectivement dans les créneaux 2 et 10 ainsi que des signaux de données dans le créneau 6. Ces signaux de données sont des signaux de données reçus du noeud n2 et redirigés par les moyens 140. Le noeud n5 ou n7 reçoit également des signaux de données dans le créneau 18. Quant au noeud n6, il est synchronisé sur les signaux de balise B' qu'il capte. Il reçoit les signaux de données émis par le noeud n5 ou n7 sur le créneau 18 et émet, également sur la fréquence f2, des signaux de données en direction du noeud n5 ou n7 sur le créneau 6. Les signaux de données reçus par le noeud n5 ou n7 du noeud n6 sont redirigés, par les moyens 140, vers le créneau d'émission 5, à la fréquence f1.

On a représenté sur cette Fig. 9b, les liaisons montantes LM1 et LM2 et descendantes LD1 et LD2 déjà représentées à la Fig .7.

Avantageusement, les terminaux de chaque noeud d'un réseau selon la présente invention utilisent deux émetteurs/récepteurs afin de pouvoir fonctionner en deux fréquences radio différentes en tant que noeud relais comme cela est montré à la Fig. 9b. Cela permet également d'accéder plus facilement à toute la ressource radio.

Avantageusement, les noeuds coordinateurs ainsi que les noeuds relais émettent des signaux de balise B ou B' en plusieurs exemplaires sur des créneaux différents, par exemple en deux exemplaires comme cela est le cas aux Figs. 9a et 9b. Ces signaux de balise B et B' portent la même information. Un noeud relais, comme le noeud n7 de la Fig. 6c (Relayage "externe") doit se synchroniser sur deux signaux de balise différents, l'une émanant de son propre noeud coordinateur n3, l'autre émanant du noeud coordinateur n2 du noeud n6 qu'il relaie. En multipliant le nombre de signaux de balise émis par les noeuds coordinateurs et les noeuds relais, le risque qu'un noeud relais ne puisse se synchroniser du fait qu'il reçoit des signaux de balise d'origines différentes sur un même créneau est diminué.

## Revendications

1. Procédé de relayage mis en oeuvre soit dans un réseau de radiocommunication comportant un noeud coordinateur, soit dans un réseau de communication comportant un sous-réseau haut et au moins un sous-réseau bas, chaque sous-réseau comportant alors un noeud coordinateur, le noeud coordinateur d'un sous-réseau bas appartenant au sous-réseau haut, chaque noeud coordinateur émettant un signal de balise pour permettre aux noeuds dudit réseau ou dudit sous-réseau correspondant de se synchroniser et d'éventuellement communiquer avec ledit noeud coordinateur, ledit procédé de relayage étant prévu pour relayer, par un noeud, dit noeud relais, une communication d'un noeud, dit noeud à relayer, vers ledit noeud coordinateur dont il dépend, **caractérisé en ce qu'**il comporte :
- une étape (E10) de détection par un noeud dudit réseau d'une situation de relayage, ledit noeud devenant un noeud à relayer,
- une étape de sélection (E20) par ledit noeud à relayer d'un noeud relais consistant à établir la topologie dudit réseau dans son ensemble pour déterminer les noeuds qui sont voisins à un saut dudit noeud à relayer et qui sont en contact radio avec ledit noeud à relayer et à sélectionner le noeud relais offrant la route du noeud à relayer vers le noeud coordinateur la plus appropriée conformément à des critères de sélection relatif à la nature de cette route,
- une étape (E30) d'émission par ledit noeud relais sélectionné à l'étape (E20) d'un signal de balise différent du signal de balise émis par le noeud coordinateur du réseau,
- une étape (E40) de synchronisation dudit noeud à relayer sur le signal de balise émis par le noeud relais, et d'établissement de la route suivie par la communication via ledit noeud relais.

2. Procédé de relayage selon la revendication 1, **caractérisé en ce que** ladite étape de détection (E10) consiste à mesurer la qualité de réception des signaux de balise émis par le noeud coordinateur dudit réseau, à comparer la qualité ainsi mesurée à un seuil et à considérer une situation de relayage détectée lorsque ladite qualité en inférieure audit seuil.

3. Procédé de relayage selon une des revendications précédentes, **caractérisé en ce qu'**après avoir sélectionné un noeud relais, ledit noeud à relayer transmet une requête de balise audit noeud relais, lequel transmet en réponse un message d'acquittement contenant les caractéristiques des signaux de balise émis par ledit noeud relais, ladite requête et ledit message d'acquittement transitant via un canal temporaire créé à l'occasion.

4. Procédé de relayage selon la revendication 3, **caractérisé en ce que** ledit noeud à relayer, pour la transmission de ladite requête de balise, se synchronise sur des signaux de balise émis de manière-continue par le noeud relais.

5. Procédé de relayage selon une des revendications précédentes, **caractérisé en ce que** pour établir la route suivie par la communication via ledit noeud relais, un canal physique de données est créé entre ledit noeud à relayer et ledit relais, ainsi qu'un canal physique de données entre le noeud relais et ledit noeud coordinateur.

6. Procédé de relayage selon une des revendications précédentes, **caractérisé en ce que**, lorsque ledit noeud relais n'appartient pas au même sous-réseau que le noeud à relayer, le noeud relais, à la réception de la requête de balise émanant dudit noeud à relayer, transmet au noeud coordinateur du sous-réseau dudit noeud à relayer une requête de balise.

7. Procédé de relayage selon une des revendications précédentes, **caractérisé en ce que** les noeuds coordinateurs ainsi que les noeuds relais émettent des signaux de balise en plusieurs exemplaires sur des créneaux différents, lesdits signaux de balise portant la même information.

8. Terminal de radiocommunication susceptible d'être un noeud d'un réseau de radiocommunication du type où un noeud coordinateur émet un signal de balise pour permettre aux noeuds dudit réseau de se synchroniser et de communiquer entre eux, **caractérisé en ce qu'**il comporte :
- des moyens de détection (100) prévus pour détecter une situation de relayage,
- des moyens (110) pour établir la topologie du réseau dans son ensemble,
- des moyens (120) pour sélectionner, lorsque les moyens de détection (100) ont détecté une situation de relayage, un noeud relais en établissant la topologie dudit réseau dans son ensemble pour déterminer les noeuds qui sont voisins à un saut dudit noeud à relayer et qui sont en contact radio avec ledit noeud à relayer et en sélectionnant le noeud relais offrant la route du noeud à relayer vers le noeud coordinateur la plus appropriée conformément à des critères de sélection relatif à la nature de cette route,
- des moyens (130) pour déclencher et mettre en oeuvre le procédé de relayage vers le noeud préalablement sélectionné par les moyens de sélection (120).

## Patentansprüche

1. Relaisverfahren, das entweder in einem Funkkommunikationsnetzwerk, umfassend einen Koordinationsknoten, oder in einem Kommunikationsnetzwerk, umfassend ein oberes Unternetzwerk und ein unteres Unternetzwerk, eingesetzt wird, wobei jedes Unternetzwerk nun einen Koordinationsknoten umfasst, wobei der Koordinationsknoten eines unteren Unternetzwerks dem oberen Unternetzwerk angehört, wobei jeder Koordinationsknoten ein Markierungssignal entsendet, um es den Knoten des Netzwerks oder des entsprechenden Unternetzwerks zu ermöglichen, sich zu synchronisieren und eventuell mit dem Koordinationsknoten zu kommunizieren, wobei das Relaisverfahren dazu vorgesehen ist, durch einen Knoten, Relaisknoten genannt, eine Kommunikation eines Knotens, zu vermittelnder Knoten genannt, zu dem Koordinationsknoten, von dem er abhängt, zu vermitteln, **dadurch gekennzeichnet, dass** es umfasst:
- einen Schritt (E10) der Erfassung einer Relaissituation durch einen Knoten des Netzwerks, wobei der Knoten ein zu vermittelnder Knoten wird,
- einen Schritt (E20) der Auswahl eines Relaisknotens durch den zu vermittelnden Knoten, darin bestehend, die Topologie des Netzwerks in seiner Gesamtheit zu erstellen, um die Knoten zu bestimmen, die zu einem Sprung des zu vermittelnden Knotens benachbart sind, und die mit dem zu vermittelnden Knoten in Funkkontakt sind, und den Relaisknoten auszuwählen, der die am besten geeignete Route von dem zu vermittelnden Knoten zum Koordinationsknoten nach Auswahlkriterien in Zusammenhang mit der Natur dieser Route bietet,
- einen Schritt (E30) des Sendens eines Markierungssignals, das sich von dem vom Koordinationsknoten des Netzwerks gesandten Markierungssignal unterscheidet, durch den in Schritt (E20) ausgewählten Relaisknoten,
- einen Schritt (E40) der Synchronisation des zu vermittelnden Knotens mit dem von dem Relaisknoten gesandten Markierungssignal und der Erstellung der von der Kommunikation über den Relaisknoten verfolgten Route.

2. Relaisverfahren nach Anspruch 1, **dadurch gekennzeichnet, dass** der Erfassungsschritt (E10) darin besteht, die Empfangsqualität der von dem Koordinationsknoten des Netzwerks gesandten Markierungssignale zu messen, die so gemessene Qualität mit einer Schwelle zu vergleichen und eine erfasste Relaissituation zu anzunehmen, wenn die Qualität unter der Schwelle liegt.

3. Relaisverfahren nach einem der vorhergehenden Ansprüche, **dadurch gekennzeichnet, dass**, nachdem ein Relaisknoten ausgewählt wurde, der zu vermittelnde Knoten eine Markierungsanfrage an den Relaisknoten überträgt, welcher als Antwort eine Quittierungsnachricht, die die Merkmale der von dem Relaisknoten gesandten Markierungssignale enthält, überträgt, wobei die Anfrage und die Quittierungsnachricht über einen für diese Gelegenheit hergestellten temporären Kanal verlaufen.

4. Relaisverfahren nach Anspruch 3, **dadurch gekennzeichnet, dass** sich der zu vermittelnde Knoten für die Übertragung der Markierungsanfrage mit Markierungssignalen synchronisiert, die kontinuierlich von dem Relaisknoten gesandt werden.

5. Relaisverfahren nach einem der vorhergehenden Ansprüche, **dadurch gekennzeichnet, dass** für die Erstellung der Route, die von der Kommunikation über den Relaisknoten verfolgt wird, ein physischer Datenkanal zwischen dem zu vermittelnden Knoten und dem Relais sowie ein physischer Datenkanal zwischen dem Relaisknoten und dem Koordinationsknoten hergestellt wird.

6. Relaisverfahren nach einem der vorhergehenden Ansprüche, **dadurch gekennzeichnet, dass**, wenn der Relaisknoten nicht demselben Unternetzwerk wie der zu vermittelnde Knoten angehört, der Relaisknoten bei Empfang der Markierungsanfrage, die von dem zu vermittelnden Knoten ausgeht, an den Koordinationsknoten des Unternetzwerks des zu vermittelnden Knotens eine Markierungsanfrage überträgt.

7. Relaisverfahren nach einem der vorhergehenden Ansprüche, **dadurch gekennzeichnet, dass** die Koordinationsknoten sowie die Relaisknoten Markierungssignale in mehreren Exemplaren auf unterschiedlichen Schlitzen übertragen, wobei die Markierungssignale dieselbe Information tragen.

8. Funkkommunikations-Endgerät, das geeignet ist, ein Knoten eines Funkkommunikationsnetzwerks, bei dem ein Koordinationsknoten ein Markierungssignal sendet, um es den Knoten des Netzwerks zu ermöglichen, sich zu synchronisieren und miteinander zu kommunizieren, zu sein, **dadurch gekennzeichnet, dass** es umfasst:
- Erfassungsmittel (100), die dazu vorgesehen sind, eine Relaissituation zu erfassen,
- Mittel (110), um die Topologie des Netzwerks in seiner Gesamtheit zu erstellen,
- Mittel (120), um, wenn die Erfassungsmittel (100) eine Relaissituation erfasst haben, einen Relaisknoten auszuwählen, wobei die Topologie des Netzwerks in seiner Gesamtheit erstellt wird, um die Knoten zu bestimmen, die zu einem Sprung des zu vermittelnden Knotens benachbart sind, und die mit dem zu vermittelnden Knoten in Funkkontakt sind, und wobei der Relaisknoten ausgewählt wird, der die am besten geeignete Route von dem zu vermittelnden Knoten zu dem Koordinationsknoten nach Auswahlkriterien in Zusammenhang mit der Natur dieser Route bietet,
- Mittel (130), um das Relaisverfahren zu dem vorher durch die Auswahlmittel (120) ausgewählten Knoten auszulösen und einzusetzen.

## Claims

1. Relaying method implemented either in a radio-communication network comprising a coordinator node, or in a communication network comprising a high subnetwork and at least one low subnetwork, each subnetwork then comprising a coordinator node, the coordinator node of a low subnetwork belonging to the high subnetwork, each coordinator node sending a beacon signal to enable the nodes in said network or said corresponding subnetwork to synchronise and possibly to communicate with said coordinator node, said relaying method being designed to relay, via a node, referred to as a relay node, a communication from a node, referred to as a node to be relayed, to said coordinator node on which it is dependent, **characterised in that** it comprises:
- a step (E10) of detection, by a node in said network, of a relaying situation, said node becoming a node to be relayed,
- a step of selection (E20) by said node to be relayed, of a relay node consisting of establishing the topology of said network overall in order to determine the nodes that are adjacent within one jump to said node to be relayed and which are in radio contact with said node to be relayed, and selecting the relay node offering the most suitable route from the node to be relayed to the coordinator node in accordance with selection criteria relating to the nature of this route,
- a step (E30) of sending, by said relay node selected at step (E20), a beacon signal different from the beacon signal sent by the coordinator node of the network,
- a step (E40) of synchronisation of said node to be relayed on the beacon signal sent by the relay node, and establishing the route followed by the communication via said relay node.

2. Relaying method according to claim 1, **characterised in that** said detection step (E10) consists of measuring the reception quality of the beacon signal sent by the coordinator node of said network, comparing the quality thus measured with a threshold and considering a relay situation detected when said quality is below said threshold.

3. Relaying method according to one of the preceding claims, **characterised in that**, after having selected a relay node, said node to be relayed transmits a beacon request to said relay node, which in response transmits an acknowledgement message containing the characteristics of the beacon signal sent by said relay node, said request and said acknowledgement message going through a temporary channel created for the occasion.

4. Relaying method according to claim 3, **characterised in that** said node to be relayed, for transmitting said beacon request, synchronises on beacon signals sent continuously by the relay node.

5. Relaying method according to one of the preceding claims, **characterised in that**, to establish the route followed by the communication via said relay node, a physical data channel is created between said node to be relayed and said relay, as well as a physical data channel between the relay node and said coordinator node.

6. Relaying method according to one of the preceding claims, **characterised in that**, when said relay node does not belong to the same subnetwork as the node to be relayed, the relay node, on receiving the beacon request coming from said node to be relayed, transmits a beacon request to the coordinator node of the subnetwork of said node to be relayed.

7. Relaying method according to one of the preceding claims, **characterised in that** the coordinator nodes and the relay nodes send beacon signals in several examples on different slots, said beacon signals carrying the same information.

8. Radio-communication terminal capable of being a node in a radio-communication network of the type where a coordinator node sends a beacon signal to enable the nodes in said network to synchronise and communicate with each other, **characterised in that** it comprises:
- detection means (100) provided for detecting a relaying situation,
- means (110) for establishing the topology of the network as a whole,
- means (120) for selecting, when the detection means (100) have detected a relaying situation, a relay node, by establishing the topology of said network overall in order to determine the nodes that are adjacent within one jump to said node to be relayed and which are in radio contact with said node to be relayed and selecting the relay node offering the most suitable route from the node to be relayed to the coordinator node in accordance with selection criteria relating to the nature of this route,
- means (130) for triggering and implementing the method of relaying to the node previously selected by the selection means (120).
